Europäisches Patentamt

European Patent Office

Office européen des brevets

(19)

(11) **EP 1 109 706 B1**

(12) **EUROPÄISCHE PATENTSCHRIFT**

(45) Veröffentlichungstag und Bekanntmachung des Hinweises auf die Patenterteilung:
**01.06.2005 Patentblatt 2005/22**

(21) Anmeldenummer: **00952897.7**

(22) Anmeldetag: **06.07.2000**

(51) Int Cl.$^7$: **B60S 1/38**

(86) Internationale Anmeldenummer:
**PCT/DE2000/002168**

(87) Internationale Veröffentlichungsnummer:
**WO 2001/003982 (18.01.2001 Gazette 2001/03)**

(54) **WISCHBLATT FÜR SCHEIBEN, INSBESONDERE VON KRAFTFAHRZEUGEN, SOWIE VERFAHREN ZUM HERSTELLEN EINES SOLCHEN**

WIPER BLADE FOR WINDSHIELDS, ESPECIALLY AUTOMOBILE WINDSHIELDS, AND METHOD FOR THE PRODUCTION THEREOF

RACLETTE D'ESSUIE-GLACE POUR VITRE, NOTAMMENT POUR PARE-BRISE DE VEHICULE, ET SON PROCEDE DE FABRICATION

(84) Benannte Vertragsstaaten:
**BE DE ES FR GB IT**

(30) Priorität: **09.07.1999 DE 19931858**
**09.07.1999 DE 19931856**
**09.07.1999 DE 19931857**
**05.07.2000 DE 10032048**

(43) Veröffentlichungstag der Anmeldung:
**27.06.2001 Patentblatt 2001/26**

(73) Patentinhaber: **ROBERT BOSCH GMBH**
**70442 Stuttgart (DE)**

(72) Erfinder: **DE BLOCK, Peter**
**B-3545 Halen (BE)**

(56) Entgegenhaltungen:
**EP-A- 0 528 643     EP-A- 0 594 451**
**DE-A- 19 814 610     DE-B- 1 247 161**

## Beschreibung

Stand der Technik

Bei Wischblättern der im Oberbegriff des Anspruchs 1 bezeichneten Art soll das Tragelement über das gesamte vom Wischblatt bestrichene Wischfeld eine vorbestimmte Verteilung der vom Wischerarm ausgehenden Wischblatt-Anpresskraft - oft auch als Anpreßdruck bezeichnet - an der Scheibe gewährleisten. Durch eine entsprechende Krümmung des unbelasteten Tragelements - also wenn das Wischblatt nicht an der Scheibe anliegt - werden die Enden der im Betrieb des Wischblatts vollständig an der Scheibe angelegten Wischleiste durch das dann gespannte Tragelement zur Scheibe belastet, auch wenn sich die Krümmungsradien von sphärisch gekrümmten Fahrzeugscheiben bei jeder Wischblattposition ändern. Die Krümmung des Wischblatts muß also etwas stärker sein als die im Wischfeld an der zu wischenden Scheibe gemessene stärkste Krümmung. Das Tragelement ersetzt somit die aufwendige Tragbügelkonstruktion mit zwei in der Wischleiste angeordneten Federschienen, wie sie bei herkömmlichen Wischblättern praktiziert wird (DE-A-15 05 397).

Die Erfindung geht aus von einem Wischblatt nach der Gattung der unabhängigen Ansprüche. Bei einem bekannten Wischblatt dieser Art (DE-C-12 47 161) sind zur Erzielung einer möglichst gleichmäßigen Druckbelastung des Wischblatts an einer ebenen Scheibe über seine gesamte Länge mehrere Ausgestaltungen des Tragelements als Problemlösung vorgesehen.

Bei einem anderen bekannten Wischblatt dieser Gattung (EP-B-0 528 643) nimmt - zur Erzielung einer gleichmäßigen Druckbelastung des Wischblatts an sphärisch gekrümmten Scheiben - die Druckbelastung an den beiden Endabschnitten wesentlich zu, wenn das Wischblatt auf eine ebene Scheibe gepreßt wird.

Die in beiden Fällen angestrebte gleichmäßige Druckverteilung über die gesamte Wischblattlänge führt jedoch zu einem schlagartigen Umspringen der zum Wischblatt gehörenden, die eigentliche Wischarbeit ausführenden Wischlippe über deren gesamte Länge aus ihrer einen in ihre andere Schlepplage, wenn das Wischblatt seine Arbeitsrichtung umkehrt. Diese Schlepplage ist unabdingbar für einen effektiven und geräuscharmen Betrieb der Wischanlage. Das schlagartige Umspringen der Wischlippe - welches zwangsläufig mit einer Auf- und Abbewegung des Wischblatts verbunden ist - erzeugt jedoch unerwünschte Klopfgeräusche. Auch ist die Abstimmung der Tragelementspannung auf die gewünschte, von Fall zu Fall andersartige Druckverteilung bei sphärisch gekrümmten Scheiben problematisch.

In der EP-A-0 594 451 werden Flachbalkenwischblätter mit variierendem Profil beschrieben, die beim Anlegen einer Prüfkraft eine bestimmte seitliche Auslenkung nicht überschreiten sollen. Dazu wird über einen äußerst komplexen Zusammenhang innerer, den Federbalken bestimmender Parameter eine Größe angegeben, die einen bestimmten Grenzwert nicht überschreiten soll. Aus der angegebenen Gleichung können nur schwierig und unvollständig Aussagen über die tatsächlich einzusetzenden Größen abgeleitet werden. Die weiteren Angaben betreffen ein unbelastetes Wischblatt, so dass Aussagen über die Qualität eines Wischblatts im Betrieb kaum möglich sind.

Außerdem erweist sich die Umsetzung der Lehren des bekannten Standes der Technik als schwierig, da die zur Verfügung stehenden Parameter nicht direkt auf neu herzustellende Wischblätter anwendbar sind.

Vorteile der Erfindung

Das erfindungsgemäße Wischblatt mit den Merkmalen des Hauptanspruchs hat den Vorteil einer durchweg guten Wischqualität, weil unter anderem ein Rattern des Wischblatts über der Scheibe - der sogenannte slip-stick-Effekt - vermieden ist. Dies resultiert aus der Erkenntnis, dass insbesondere der seitliche Auslenkungswinkel und weniger das absolute Nacheilen, also die absolute Auslenkung der Spitzen unter Belastung für den slip-stick-Effekt zu beachten ist. Es ist demnach von Vorteil, wenn das Wischblatt so ausgelegt wird, dass die seitliche Auslenkung der im Betrieb nacheilenden Enden des Wischblatts einen seitlichen Auslenkungswinkel einer bestimmten Größe nicht überschreiten. Aus der gefundenen Größe für diese Winkel können dann für das Wischblatt wichtige Parameter abgeleitet werden, die zueinander in einer einfachen Beziehung stehen und in dieser Beziehung eine obere Grenze von 0,009 nicht überschreiten sollen. Mit Hilfe dieser Beziehung und der angegebenen Obergrenze lassen sich sehr einfach Querschnittsprofile für das Tragelement bestimmen, die dann zu einem guten Wischergebnis führen. Insbesondere Wischblätter mit über ihre Länge konstantem Querschnitt sind auf diese Weise besonders einfach herzustellen.

Durch die in den weiteren Ansprüchen angegebenen Maßnahmen sind vorteilhafte Weiterbildungen und Ausgestaltungen des erfindungsgemäßen Wischblatts möglich.

Die Wischqualität steigt weiter, wenn das Verhältnis aus dem Produkt aus der Auflagekraft und dem Quadrat der Länge zu dem Produkt aus dem 48-fachen des Elastizitätsmoduls des Tragelements und dem $I_{zz}$-Trägheitsmoment eine obere Grenze von 0,005 nicht übersteigt.

Besonders gut anwendbare Querschnittsprofile sind von rechteckiger Gestalt und weisen über die Länge des Wischblatts eine im wesentlichen konstante Breite und eine im wesentlichen konstante Dicke auf. Das Tragelement kann dabei auch aus Einzelbalken bestehen, die seitlich nebeneinander oder übereinander angeordnet sind und deren Gesamtbreite bzw. deren Gesamtdicke sich jeweils zu einer Gesamtbreite und/oder zu einer Gesamtdicke addieren. Bei einem solchen rechteckigen Querschnittsprofil kann das Trägheitsmoment $I_{zz}$ als $d*b^3/12$ eingesetzt werden, wobei für d und b jeweils die Gesamtdicke bzw. die Gesamtbreite einzusetzen ist. Auf diese Weise erhält man eine sehr einfach handhabbare Beziehung, über die das Tragelement für die Wischblätter optimiert werden kann, wenn die angegebenen Obergrenzen von 0,009 und insbesondere von 0,005 nicht überschritten werden.

Insbesondere wenn komplexere Querschnittsprofile für das Tragelement gewählt werden, die beispielsweise über die Länge des Wischblatts variieren oder eine leiterartige Struktur oder dergleichen aufweisen, kann eine gute Wischqualität dennoch erreicht werden, wenn berücksichtigt wird, dass der seitliche Auslenkungswinkel γ während des Betriebs des Wischblatts eine Größe von 0,5° insbesondere von 0,3° nicht überschreiten. Diese Angaben gelten für einen mittleren Reibwert μ von 1 und sind bei größeren oder kleineren Reibwerten entsprechend zu vergrößern bzw. zu verkleinern.

Der seitliche Auslenkungswinkel γ ist der Winkel unter dem die Tangente an das Tragelementende die in Richtung der Längserstreckung des Tragelements verlaufende Achse schneidet. In einer ersten Näherung kann darunter auch der von der Achse in Längserstreckungsrichtung des Tragelements und einer Geraden durch den Angriffspunkt des Wischerarms am Tragelement und durch ein Tragelelementende eingeschlossene Winkel verstanden werden.

Sehr gute Wischergebnisse lassen sich erzielen, wenn die Breite b und die Dicke d zur Gesamtlänge des Tragelements in einem bestimmten Verhältnis stehen. Insbesondere soll das Produkt aus der Breite und dem Quadrat der Dicke das 40-fache des Quadrats der Länge nicht über und das 20-fache des Quadrats der Länge nicht unterschreiten. Die Breiten und/oder die Dicken von zusammengesetzten Tragelementen addieren sich jeweils zu einer Gesamtbreite bzw. Gesamtdicke, die dann berücksichtigt wird.

Das erfindungsgemäße Wischblatt mit den Merkmalen des Anspruchs 10 hat den Vorteil, dass lediglich ein Parameter zur Einstellung der nach außen abfallenden Auflagekraftverteilung variiert werden muß. Die Krümmung bzw. der Krümmungsverlauf entlang des Tragelements kann in frei programmierbaren Biegemaschinen voreingestellt werden. Dadurch können auch kurze Versuchsreihen zur Optimierung der Auflagekraftverteilung und damit des Krümmungsverlaufs schnell und ohne großen Aufwand durchgeführt werden. Insbesondere ist es von Vorteil, wenn die den Krümmungsverlauf beherrschende Koordinate entlang des Trägheitselements verläuft. Damit sind aufwendige Rückrechnungen auf ein kartesisches Koordinatensystem, bei dem jede Änderung an einer Position x eine Verschiebung der nachfolgenden "x-Werte" bedingt, vermieden.

Der mathematische Zusammenhang zwischen der zweiten Ableitung der Krümmung nach der angepaßten Koordinate und dem Auflagekraftverlauf ebenfalls nach der angepaßten Koordinate wird besonders einfach, wenn der Elastizitätsmodul des Tragelementwerkstoffs sowie das Flächenträgheitsmoment des Tragelements über dessen Länge konstant sind. Bei vorgegebener Auflagekraftverteilung kann dann durch zweifaches Integrieren oder auch nummerisch die Krümmung direkt ausgerechnet werden.

Eine optimale Anpassung eines solchen Wischblattes auch an Scheiben mit komplizierterem Krümmungsverlauf ist möglich, wenn die Krümmung der Scheibe von der Krümmung des Tragelements bzw. die zweite Ableitung der Krümmung der Scheibe von der zweiten Ableitung der Krümmung des Tragelements abgezogen wird. In diesem Fall kann eine Auflagekraftverteilung vorgegeben werden, wie sie für ein Wischblatt, das auf eine ebene Scheibe aufgedrückt wird, erwünscht ist. Die Differenz der zweiten Ableitungen der jeweiligen Krümmungen ist dann wieder proportional dieser Auflagekraftverteilung.

Ein erfindungsgemäßes Wischblatt mit den Merkmalen des Anspruchs 15 zeichnet sich dadurch aus, dass ohne spezielle Anpassung für durchschnittliche Scheibentypen ein hervorragendes Wischergebnis erzielt wird. Durch die aufgeführte, sehr einfache Maßnahme wird erreicht, dass die Auflagekraftverteilung in den allermeisten Fällen den Anforderungen genügt. Die genannten Stützpunkte sind hinreichend genau, um daraufhin einen einzuhaltenden Krümmungsverlauf zu bestimmen.

Optimiert wird ein Wischblatt nach Anspruch 15 durch die Maßnahmen des Anspruchs 16. Auch bei komplexeren Scheibungskrümmungsverläufen kann durch die Vorgabe der Auflagekraftverteilung an bestimmten Stützpunkten die Wischqualität gesteigert werden. Trotzdem ist es möglich, das Wischblatt ohne aufwendige Berechnungen zu konstruieren. Der Krümmungsverlauf kann im wesentlichen vorbestimmt und durch einfache Versuche optimiert werden. Solange die Vorgabe, dass die Auflagekraftverteilung, die vorherrscht, wenn das Wischblatt auf die zu wischende Scheibe gedrückt ist, in einem Bereich ungefähr hälftig zwischen Mitte und Ende des Wischblatts höher ist als am Ende des Wischblatts eingehalten werden, ist eine hervorragende Wischqualität gewährleistet.

In einem erfindungsgemäßen Verfahren zur Herstellung eines solchen Wischblatts werden die einzelnen Parameter entsprechend der erfindungsgemäßen Lehre ausgewählt und wird das Tragelement so vorgebogen, dass sein Krümmungsverlauf mindestens eine der vorgenannten Bedingungen erfüllt. Dabei ist es besonders günstig, das Tragelement zuerst zu biegen und dann mit der Wischleiste und dem Verbindungselement zusammenzufügen. Es ist aber auch möglich, das Verbindungselement mit dem Tragelement zu verbinden und dann erst die Wischleiste hinzuzufügen.

Zeichnung

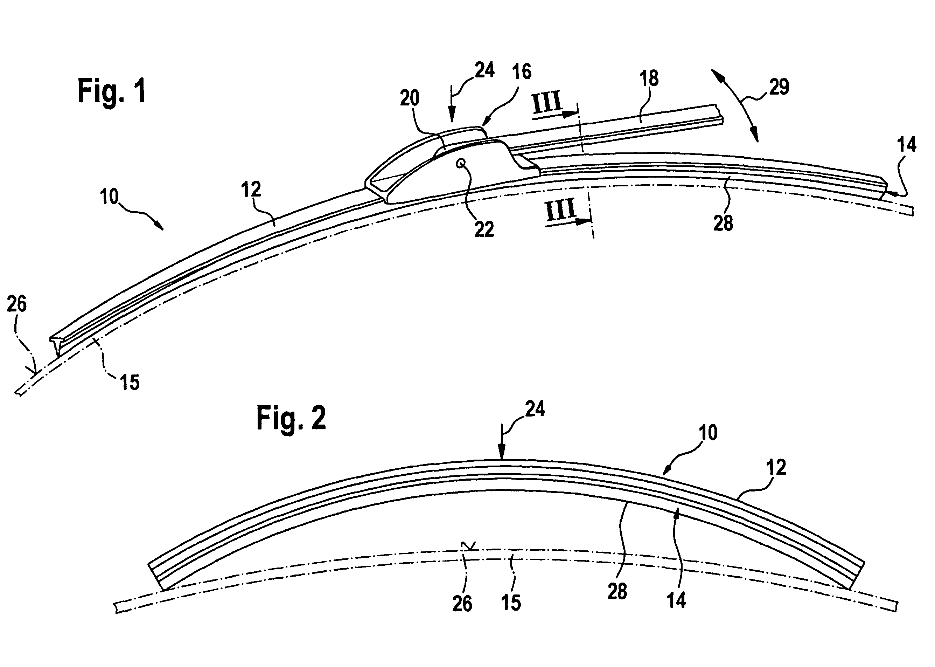

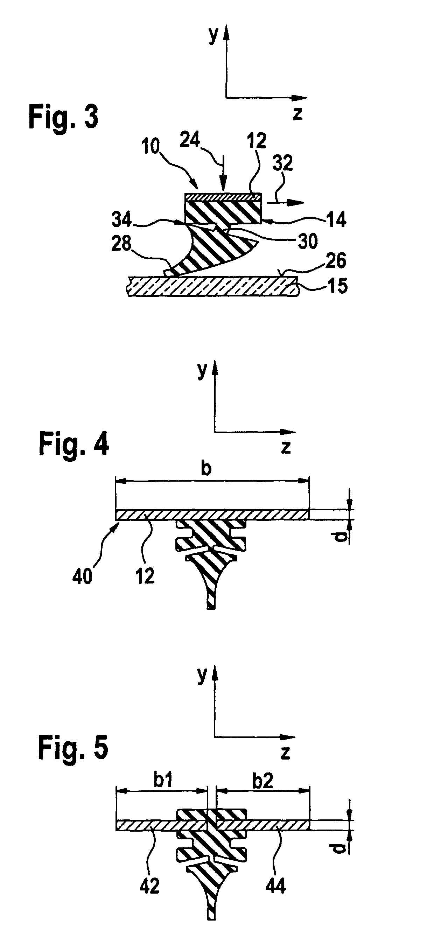

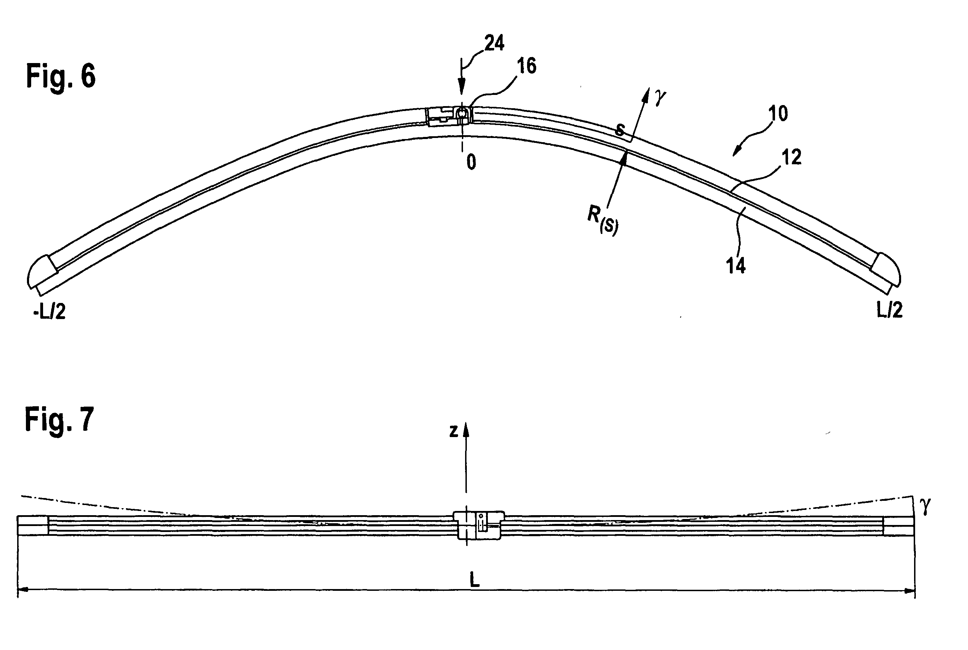

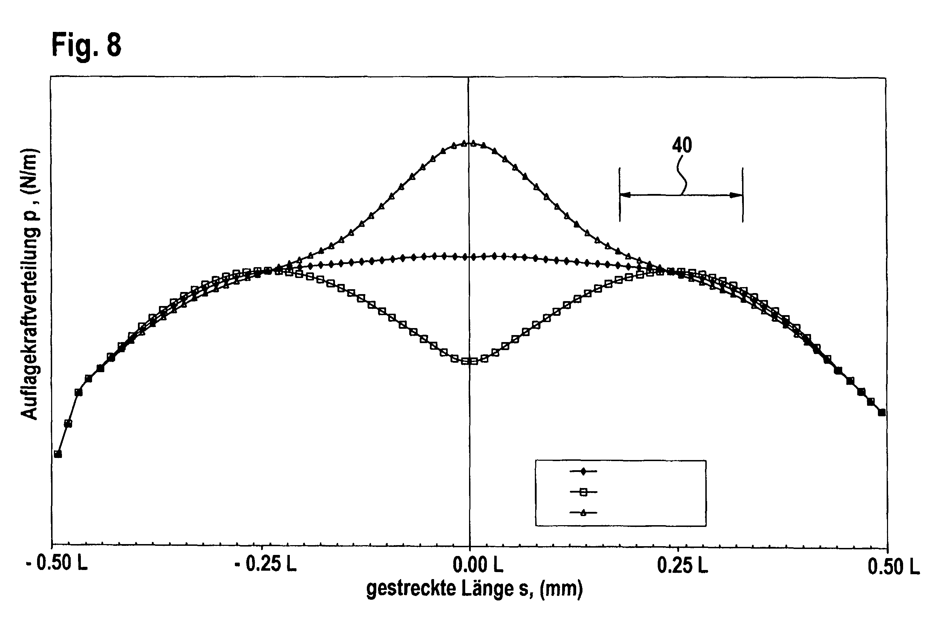

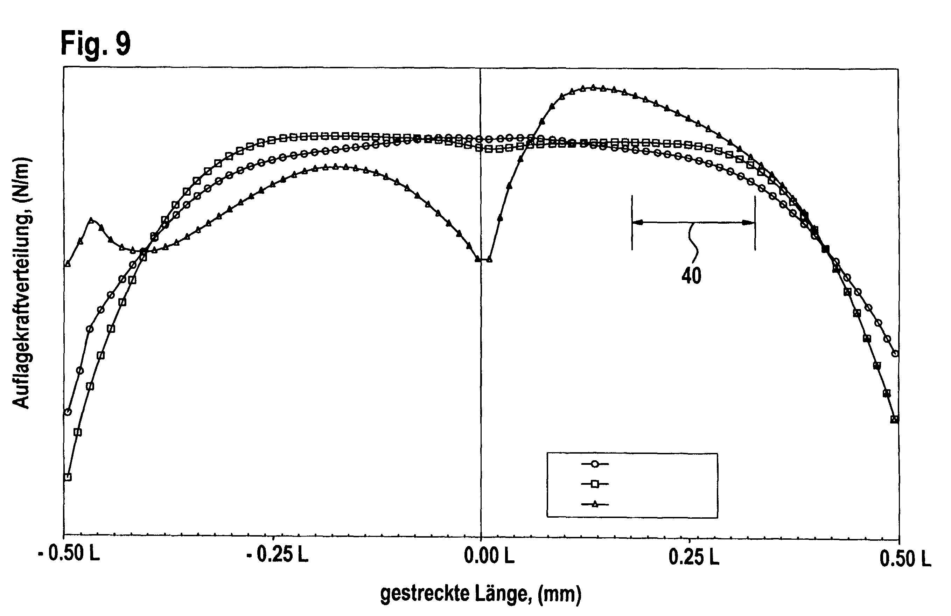

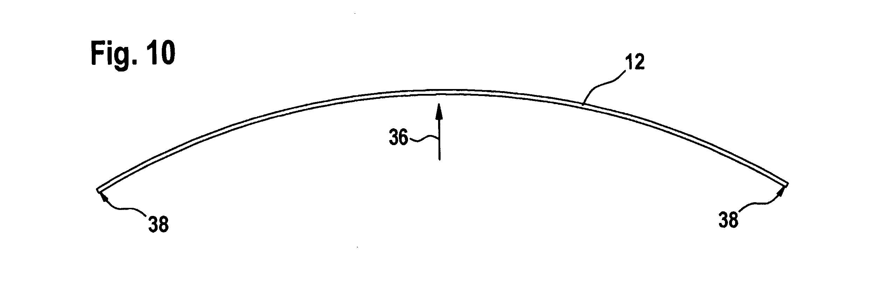

In der Zeichnung zeigen: Figur 1 eine perspektivische Darstellung eines an der Scheibe angelegten, mit einem zur Scheibe belasteten Wischerarm verbundenen Wischblatts, Figur 2 eine Prinzipdarstellung einer Seitenansicht eines unbelastet auf die Scheibe aufgesetzten Wischblatts, gegenüber Figur 1 verkleinert dargestellt, Figur 3 die Schnittfläche eines Schnitts durch das Wischblatt gemäß Figur 1, entlang der Linie III-III in vergrößerter Darstellung, die Figuren 4 und 5 eine Variante zu Figur 3, die Figuren 6 und 7 ein Wischblatt in einer anderen Ausführungsform mit einem eingezeichneten Koordinatensystem, die Figuren 8 und 9 jeweils berechnete und gemessene Werte für die Auflagekraftverteilung über der Länge des Wischblatts aufgetragen und Figur 10 eine unmaßstäbliche Prinzipdarstellung eines zum Wischblatt gehörenden Tragelements in Seitenansicht.

Beschreibung des Ausführungsbeispiels

Ein in Figur 1 dargestelltes Wischblatt 10 weist ein langgestrecktes, federelastisches, auch als Flachbalken zu bezeichnendes Tragelement 12 für eine Wischleiste 14 auf, das in Figur 10 separat dargestellt ist. Wie aus den Figuren 1, 3 und 4 ersichtlich ist, sind das Tragelement 12 und die Wischleiste 14 längsachsenparallel miteinander verbunden. An der von der zu wischenden Scheibe 15 - in Figur 1 strichpunktiert gezeichnet - abgewandten Oberseite des Tragelements 12 ist als Verbindungsmittel eine Anschlußvorrichtung 16 angeordnet, mit deren Hilfe das Wischblatt 10 mit einem an der Karosserie eines Kraftfahrzeugs geführten, angetriebenen Wischerarm 18 lösbar verbunden werden kann. An der der Scheibe 15 zugewandten Unterseite des Tragelements 12 ist die langgestreckte, gummielastische Wischleiste 14 angeordnet.

An dem freien Ende 20 des Wischarms 18 ist ein als Gegenanschlußmittel dienender Haken angeformt, welcher einen zur Anschlußvorrichtung 16 des Wischblatts 10 gehörenden Gelenkbolzen 22 umgreift. Die Sicherung zwischen dem Wischerarm 18 und dem Wischblatt 10 wird durch nicht näher dargestellte, an sich bekannte, als Adapter ausgebildete Sicherungsmittel übernommen.

Der Wischerarm 18 und damit auch dessen Hakenende 20 sind in Richtung des Pfeiles 24 zur zu wischenden Scheibe 15 belastet, deren zu wischende Oberfläche in den Figuren 1 und 2 durch eine strichpunktierte Linie 26 angedeutet ist. Die Auflagekraft $F_{wf}$ (Pfeil 24) legt das Wischblatt 10 über dessen gesamte Länge an der Oberfläche 26 der zu wischenden Scheibe 15 an.

Da die in Figur 2 dargestellte strichpunktierte Linie 26 die stärkste Krümmung der Scheibenoberfläche im Bereich des Wischfeldes darstellen soll ist klar ersichtlich, daß die Krümmung des mit seinen beiden Enden an der Scheibe anliegenden, noch unbelasteten Wischblatts 10 stärker ist als die maximale Krümmung der sphärisch gekrümmten Scheibe 15. Unter der Auflagekraft $F_{wf}$ (Pfeil 24) legt sich das Wischblatt 10 mit seiner zur Wischleiste 14 gehörenden Wischlippe 28 über seine gesamte Länge an der Scheibenoberfläche 26 an. Dabei baut sich im bandartigen federelastischen Tragelement 12 eine Spannung auf, welche für eine ordnungsgemäße Anlage der Wischleiste 14 bzw. der Wischlippe 28 über deren gesamte Länge an der Kraftfahrzeugscheibe 15 sorgt. Während des Wischbetriebs bewegt der Wischerarm 18 das Wischblatt 10 quer zu dessen Längserstreckung über die Scheibe 15. Diese Wisch- oder Arbeitsbewegung ist in Figur 1 mit dem Doppelpfeil 29 bezeichnet.

Im folgenden soll nun auf die besondere Ausgestaltung des erfindungsgemäßen Wischblatts näher eingegangen werden. Wie die unmaßstäblich dargestellte Figur 3 zeigt, ist die Wischleiste 14 an der unteren, der Scheibe 15 zugewandten Bandfläche des Tragelements 12 angeordnet. Mit Abstand von dem Tragelement 12 ist die Wischleiste 14 von ihren beiden Längsseiten her so eingeschnürt, daß in ihrem Längsmittelbereich ein Kippsteg 30 verbleibt, der sich über die gesamte Länge der Wischleiste 14 erstreckt. Der Kippsteg 30 geht in die Wischlippe 28 über, die einen im wesentlichen keilförmigen Querschnitt aufweist. Durch die Auflagekraft (Pfeil 24) wird das Wischblatt beziehungsweise die Wischlippe 28 gegen die zu wischende Oberfläche 26 der Scheibe 15 gedrückt, wobei sie unter dem Einfluß der Wischbewegung - von der in der Figur 3 speziell die eine der beiden gegenläufigen Wischbewegungen (Doppelpfeil 29) betrachtet wird und die durch den Richtungspfeil 32 angedeutet ist - in eine sogenannte Schlepplage kippt, in der sich die Wischlippe an dem am Tragelement 12 gehaltenen Teil der Wischleiste 14 über ihre gesamte Länge abstützt. Dieser Abstützung welche in der Figur 3 mit dem Pfeil 34 gekennzeichnet ist erfolgt stets - in Abhängigkeit von der jeweiligen Wischrichtung (Doppelpfeil 29 bzw. Pfeil 32) an der in der jeweiligen Wischrichtung hintenliegenden Oberkante der Wischlippe 28, sodaß diese stets in einer sogenannten Schlepplage über die Scheibe geführt wird. Diese Schlepplage ist für einen effektiven und geräuscharmen Betrieb der Wischvorrichtung notwendig. Die Umkehrung der Schlepplage erfolgte in der sogenannten Umkehrposition des Wischblatts 10, wenn dieses seine Wischbewegung (Doppelpfeil 29) umkehrt. Dabei führt das Wischblatt eine Auf- und Abbewegung aus, welche durch das Umkippen der Wischlippe 28 bedingt ist. Die Aufbewegung erfolgt entgegen Richtung des Pfeiles 24 und somit auch entgegen der Anlegekraft. In der entgegen dem Pfeil 32 gerichteten anderen Wischbewegung ergibt sich somit ein Spiegelbild der Figur 3.

In der gegenüber dem Wischblatt in Figur 1 vergrößert dargestellten Figur 4 ist ein Querschnittsprofil 40 gezeigt, mit einer rechteckigen Schnittfläche mit einer Breite b und einer Dicke d. Außerdem ist ein Koordinatensystem über das Tragelement 12 gezeichnet. In Figur 6 ist als 3. Koordinate eine der Krümmung des Tragelements 12 folgende s-Koordinate eingezeichnet, zu der die y- und z-Koordinaten senkrecht stehen.

Wird nun das Wischblatt 10 mit einer Kraft $F_{wf}$ (Pfeil 24) insbesondere vom Wischarm 18 auf eine Scheibe 26 gepreßt, ergibt sich eine gewisse Kraftverteilung p(s), die zu einem Moment M(s) führt, das maximal in der Mitte des Tragelements 12 ist. Für eine, für den Wischbetrieb günstige konstante Auflagekraftverteilung

$$p = \frac{F_{wf}}{L}$$

ist das Moment

$$M(s) = p * \frac{(\frac{L}{2} - s)^2}{2}$$

und somit

$$M(s) = F_{wf} * \frac{(\frac{L}{2} - s)^2}{2L}$$

Für eine nach außen abnehmende Auflagekraftverteilung, die sich insbesondere zum Umlegen der Wischlippen eignet, ist das Moment M(s) über seine Gesamtlänge etwas kleiner als das für eine konstante Kraftverteilung berechnete Moment:

$$M(s) < p * \frac{(\frac{L}{2} - s)^2}{2L}$$

Geht man nun davon aus, dass ein Reibwert $\mu$ für eine trokkene Scheibe ungefähr 1 ist, ist im Betrieb das seitliche Moment gleich dem Biegemoment M(s), was insbesondere aus der vorgegebenen Kraftverteilung p(s) folgt.

Aus dem seitlichen Biegemoment folgt ein seitlicher Auslenkungswinkel $\gamma$, der sich durch Integration der Einzelauslenkungen vom Angriffspunkt des Wischerarms am Wischblatt bis zum Wischblattende hin berechnen läßt. Im Falle einer mittig angeordneten Anschlußvorrichtung 16 berechnet sich der Auslenkungswinkel nach

$$\gamma = \int_0^{L/2} \frac{M(s)}{E * I_{zz}} ds$$

Unter Berücksichtigung der Beziehung des Momentes für eine konstante Auflagekraftverteilung erhält man eine einfache Abschätzung für den Winkel $\gamma$:

$$\gamma < \int_0^{L/2} \frac{p(s)(\frac{L}{2} - s)}{2 * E * I_{zz}} ds$$

Durch Integration erhält man

$$\gamma < \frac{p * L^3}{48 * E * I_{zz}} = \frac{F_{wf} * L^2}{48 * E * I_{zz}}$$

Der Erfindung liegt unter anderem die Erkenntnis zugrunde, dass eine gute Wischqualität insbesondere durch Vermeiden von Rattern dann erzielt wird, wenn der Winkel $\gamma$ die Größe 0,5° (=0,009rad) insbesondere die Größe 0,3° (=0,005rad) nicht überschreitet. Damit läßt sich eine einfache Beziehung zwischen der Auflagekraft und den geometrischen Größen des Wischblatts herleiten, gemäß dem

$$\frac{F_{wf} * L^2}{48 * E * I_{zz}} < 0,009$$

insbesondere < 0,005 ist.

Für dem am häufigsten auftretenden Fall eines rechteckigen Profils 40, wie in Figur 3 dargestellt, bestimmt sich das Trägheitsmoment zu:

$$I_{zz} = \frac{d * b^3}{12}$$

wobei

d =     Dicke des Tragelements
b =     Breite des Tragelements ist.

Die Breite b und die Dicke d sind folglich so auszuwählen, dass

$$\frac{F_{wf} * L^2}{4 * E * d * b^3} < 0,009$$

insbesondere <0,005 sein soll.

Ist das Tragelement 12 in zwei einzelne Federbalken 42 und 44 aufgeteilt, wie das in Figur 4 dargestellt ist, so kann bei den obigen Überlegungen in erster Näherung die Breite b als Summe der Einzelbreiten b1 und b2 angenommen werden: b=$b_1$+$b_2$. Damit lassen sich auch für derartige Systeme einfache Beziehungen zwischen der Breite und der Dicke eines Tragelements herleiten.

Für den Fall, dass kein rechteckiges Querschnittsprofil gewählt werden soll, ist es notwendig, das Trägheitsmoment $I_{zz}$ zu bestimmen und in die oben genannten Beziehungen entsprechend einzusetzen. Ebenso sind Querschnittsveränderungen über die Länge des Wischblatts oder ein nicht zentraler Angriffspunkt des Wischerarms am Wischblatt in den obigen Überlegungen entsprechend zu berücksichtigen.

Um ein möglichst geräuscharmes Umlegen der Wischlippe 28 aus ihrer einen Schlepplage in ihre andere Schlepplage zu erreichen, wird das zur Verteilung der Anlegekraft (Pfeil 24) dienende Tragelement 12 so ausgelegt, daß der Anlegedruck der Wischleiste 24 beziehungsweise der Wischlippe 28 an der Scheibenoberfläche 26 in deren Mittelabschnitt 36 (Figur 10) größer ist als an wenigstens einen der beiden Endabschnitten 38.

Die Verteilung der Anlagekraft über das Tragelement erfolgt in Abhängigkeit verschiedener Parameter des Tragelements wie beispielweise das Querschnittsprofil, der Querschnittsverlauf über die Länge des Tragelements oder auch der Radiusverlauf R(s) entlang des Tragelements. Eine Optimierung des Tragelements in Richtung auf eine vorgegebene Auflagekraftverteilung p (s) ist deshalb sehr aufwendig. Der Erfindung liegt nun die Erkenntnis zugrunde, dass bei einem Tragelement mit einem über die Länge des Tragelements im wesentlichen konstanten, insbesondere rechteckigen Querschnitt, die Auflagekraftverteilung p (s) über eine Vorgabe der Krümmung K entlang einer Koordinate s festgelegt werden kann, wobei die Koordinate s sich entlang des Tragelements erstreckt. Die Krümmung K(s) ist gleich dem inversen Radius in Abhängigkeit von s:

$$K(s) = \frac{1}{R(s)}$$

Bei dem Tragelement besteht eine Beziehung zwischen dem Biegemoment M, dem Radius R des Tragelements, dessen Elastizitätsmodul E sowie dem an dem jeweiligen Ort vorherrschenden Flächenträgheitsmoment I. Die Beziehung wird besonders einfach, wenn sie auf die mit den Tragelementen mitlaufenden Koordinate s bezogen wird:

$$K(s) = \frac{M(s)}{E * I}$$

Durch zweimaliges Differenzieren nach dem Ort s erhält man die Beziehung:

$$\frac{d^2 K(s)}{ds^2} = \frac{d^2 M(s) / ds^2}{E * I}$$

Da die zweite Ableitung des Biegemoment M nach der mitlaufenden Koordinate s gleich der Auflagekraftverteilung p entlang der Koordinate s entspricht, die entsteht, wenn man das Tragelement auf eine ebene Scheibe aufpreßt, folgt daraus, dass die zweite Ableitung der Krümmung K nach der mitlaufenden Koordinate s bis auf eine Konstante mit dieser Auflagekraftverteilung p auf einer ebenen Scheibe übereinstimmt. Die Konstante ist abhängig vom Elastizitätsmodul E sowie vom Flächenträgheitsmoment I, das seinerseits sehr einfach wird, wenn es sich um einen rechteckigen Querschnitt handelt. Bei vorgegebener, nach außen abfallender Auflagekraftverteilung p kann darüber rechnerisch oder in einfachen Versuchen das Krümmungsprofil K(s) ermittelt werden. Die äußere Gestalt und damit die für die Herstellung notwendigen Parameter des Tragelements sind damit vom Fachmann einfach zu ermitteln.

Um die Form der Scheibe zu berücksichtigen, für die das Wischblatt verwendet werden soll, ist die obige Beziehung dahingehend zu korrigieren, dass von der für eine ebene Scheibe vorgegebenen, nach außen abfallenden Auflagekraftverteilung p entlang der Koordinate s, die noch durch den Elastizitätsmodul E und das Flächenträgheitsmoment I dividiert wird, die zweite Ableitung der Krümmung $K_{Scheibe}$ der Scheibe nach der Koordinate s dazu addiert werden muß:

$$\frac{d^2 K(s)}{ds^2} = \frac{p(s)}{E * I} + \frac{d^2 K_{Scheibe}(s)}{ds^2}$$

Auch hierüber ist es für den Fachmann einfach, ein Tragelement für eine bestimmte Scheibe zu konfigurieren:

- Festlegen der Länge L und des Querschnittprofils, insbesondere die Breite b und die Dicke d über Erfahrungswerte,

- Festlegen einer Auflagekraft $F_{wf}$ bzw. einer Auflagekraftverteilung p für eine ebene Scheibe, die eine gute Wischqualität gewährleistet, ebenfalls über Erfahrungswerte,

- Ausmessen des Krümmungsverlaufes $K_{Scheibe}$ der Scheibe,

- Zweifaches Ableiten dieses Krümmungsverlaufes $K_{Scheibe}$ der Scheiben nach einer mit der Krümmung mitlaufenden Koordinate s,

- Berechnung der zweiten Ableitung des Krümmungsverlaufes K(s) des Tragelements nach obiger Beziehung,

- Zweifaches Integrieren ergibt den gesuchten Krümmungsverlauf K(s) des Tragelements.

Es hat sich gezeigt, dass gute Wischergebnisse dann erzielt werden können, wenn die Krümmung K entlang der mitlaufenden Koordinate s derart ist, dass die Auflagekraftverteilung, die vorherrscht, wenn das Wischblatt auf eine ebene Scheibe gedrückt ist, in einem Bereich ungefähr hälftig zwischen Mitte und Ende des Wischblatts höher ist als am Ende des Wischblatts. In den Figuren 8 und 9 ist dieser Bereich 40 für eine Seite angedeutet. Der Erfindung liegt die Erkenntnis zugrunde, dass dem Verlauf der Auflagekraftverteilung p im Bereich 40 eine kleinere Bedeutung zukommt, als der Relation zwischen der Auflagekraftverteilung p im Bereich 40 zur Auflagekraftverteilung p an den Enden des Wischblatts. In den Figuren 8 und 9 ist jeweils die gesamte Länge L eines Wischblatts aufgetragen, wobei das Anschlußelement 16 in der Mitte des Wischblatts angeordnet ist, so dass den Wischblattenden die Größe 0,50 L zukommt.

Sehr gute Wischergebnisse werden erzielt, wenn die Krümmung K entlang einer der Längserstreckung des Tragelements 12 folgenden Koordinate s solche Werte aufweist, dass die Auflagekraftverteilung p, die vorherrscht, wenn das Wischblatt auf die zu wischende Scheibe gedrückt ist, im Bereich ungefähr hälftig zwischen Mitte und Ende des Wischblatts höher ist als am Ende des Wischblatts. Durch die Berücksichtigung des Scheibenverlaufs, für den das Wischblatt vorgesehen ist, wird die allgemeine Eignung für beliebige Scheiben zwar eingeschränkt, die ausgewählte Scheibe jedoch optimal gewischt.

Figur 10 zeigt einen möglichen Krümmungsverlauf K des Tragelements 12, der eine Auflagekraftverteilung p der Wischlippe 28 an der Scheibe 15 ergeben kann, die zum Wischblattende hin abfällt. Bei diesem federelastischen Tragelement 12, das unbelastet eine stärkere Hohlkrümmung gegenüber der Scheibe aufweist als diese im Bereich des vom Wischblatt überstrichenen Wischfeldes gekrümmt ist, ist der Krümmungsverlauf K so ausgeführt, daß dieser im Mittelabschnitt 36 des Tragelements 12 stärker ist als an dessen Endabschnitten 38.

Durch die Verringerung der Auflagekraft der Wischlippe 28 an der Scheibenoberfläche 26 im Bereich eines Wischblattendes oder an beiden Wischblattenden wird ein schlagartiges Umspringen oder Umschnappen der Wischlippe 28 aus ihrer einen Schlepplage in ihre andere Schlepplage vermieden. Vielmehr erfolgt beim erfindungsgemäßen Wischblatt ein vergleichsweise sanftes Umlegen der Wischlippe vom Wischblattende aus fortschreitend zur Wischlippenmitte beziehungsweise bis zum anderen Wischlippenende. Die Figur 3 zeigt in Verbindung mit Figur 1, daß auch bei sphärisch gekrümmten Scheiben die geringer belasteten Endabschnitte der Wischlippe 28 noch wirksam an der Scheibenoberfläche anliegen.

Allen Ausführungsbeispielen ist gemeinsam, daß der Anlegedruck (Pfeil 24) der Wischleiste 14 an der Scheibe 15 in deren Mittelabschnitt 36 größer ist als an wenigstens einem ihrer beiden Endabschnitte 38. Dies gilt auch dann, wenn - abweichend vom gegenständlich gezeigten Wischblatt 10 mit einem einteiligen, als Federschiene dargestelltem Tragelement 12 - das Tragelement mehrteilig aufgebaut ist. Unter Umständen kann es jedoch nötig sein, auch andere Auflagekraftverteilungen vorzugeben. Mit den aufgezeigten Beziehungen können aber auch dann Wischblätter konzipiert werden, die hervorragende Wischergebnisse erzielen.

Bei dem erfindungsgemäßen Verfahren zur Herstellung eines Wischblatts wird wie bereits oben angegeben zuerst die Kontur und der Krümmungsverlauf K bestimmt und dann das Tragelement 12 mit der Wischleiste 14 und dem Verbindungselement 16 zusammengefügt. Ist das Tragelement aus zwei parallelen Flachbalken aufgebaut, können diese bevorzugt miteinander, d.h. direkt nebeneinander vorgebogen werden, was einen sehr symmetrischen und damit verwindungsstabilen Aufbau des Wischblatts gewährleistet. Die beiden Tragelementhälften sind dann im laufenden Verfahren gemeinsam weiter zu verarbeiten, um eine versehentliche Separation zu vermeiden. Nach dem das Tragelements gebogen ist, wird entweder zuerst die Wischleiste angebracht, beispielsweise durch Ankleben oder Anvulkanisieren, oder auch insbesondere bei zwei Tragelementhälften durch Einlegen der Tragelementhälften in Längsnuten der Wischleiste und dann das Verbindungselement aufgebracht. Insbesondere, wenn das Verbindungselement aufgeschweißt wird, ist die Wischleiste erst nachträglich anzubringen, um thermische Schäden am Wischgummi zu vermeiden.

## Patentansprüche

1. Wischblatt für Scheiben, insbesondere für Kraftfahrzeuge, mit mindestens einem Tragelement (12), einer Wischleiste (14) und einem Verbindungsmittel (16) für einen Wischerarm (18), wobei das Tragelement (12) ein langgestreckter Flachbalken ist, an dem die Wischleiste (14) und das Verbindungsmittel (16) befestigt sind, **dadurch gekennzeichnet, dass** das Tragelement (12) ein Querschnittsprofil aufweist, bei dem

$$\frac{F_{wf} * L^2}{48 * E * I_{zz}} < 0{,}009$$

sind, wenn $F_{wf}$ die vom Wischerarm (18) auf das Wischblatt ausgeübte Auflagekraft oder die Auflagekraft ist, für die das Wischblatt ursprünglich ausgelegt wurde und L die Länge des Tragelements (12), E der Elastizitätsmodul des Tragelements (12), $I_{zz}$ das Trägheitsmoment des Querschnittsprofils um die z-Achse senkrecht auf eine mit dem Tragelement (12) mitlaufende s-Achse sowie senkrecht auf eine y-Achse ist.

2. Wischblatt nach Anspruch 1, **dadurch gekennzeichnet, dass**

$$\frac{F_{wf} * L^2}{48 * E * I_{zz}} < 0{,}005$$

ist.

3. Wischblatt nach Anspruch 1 oder 2, **dadurch gekennzeichnet, dass** das Tragelement (12) ein im wesentlichen rechteckiges Querschnittsprofil (40) aufweist, mit einer im wesentlichen konstanten Breite b und einer im wesentlichen konstanten Dikke d.

4. Wischblatt nach einem der vorhergehenden Ansprüche, **dadurch gekennzeichnet, dass** das Tragelement (12) aus mindestens zwei Einzelbalken (42, 44) besteht und dass sich die Breiten (bl, b2) der Einzelbalken (42, 44) zu einer Gesamtbreite b addieren.

5. Wischblatt nach einem der vorhergehenden Ansprüche, **dadurch gekennzeichnet, dass** die Breite b und die Dicke d des Tragelements (12) so ausgewählt sind, dass

$$\frac{F_{wf} * L^2}{4 * E * d * b^3} < 0{,}009$$

ist.

6. Wischblatt nach einem der Ansprüche 1 bis 4, **dadurch gekennzeichnet, dass** die Breite b und die Dicke d des Flachbalkens so ausgewählt sind, dass

$$\frac{F_{wf} * L^2}{4 * E * d * b^3} < 0{,}005$$

ist.

7. Wischblatt für Scheiben, insbesondere für Kraftfahrzeug, mit mindestens einem Tragelement (12), einer Wischleiste (14) und einem Verbindungsmittel (16) für einen Wischerarm (18), wobei das Tragelement (12) ein langgestreckter Flachbalken ist, an dem die Wischleiste (14) und das Verbindungsmittel (16) befestigt sind, insbesondere nach einem der vorhergehenden Ansprüchen, **dadurch gekennzeichnet, dass** das Tragelement (12) ein Querschnittsprofil (40) aufweist, das einen seitlichen Auslenkungswinkel mindestens eines der Tragelementenden bezogen auf die Längserstreckung des Tragelements von γ < 0,5° insbesondere < 0,3° auf der Scheibe (26) erzeugt, wenn das Wischblatt auf der Scheibe (26) quer zu seiner Längserstreckung bewegt wird und der Reibungskoeffizient zwischen Scheibe (26) und Wischleiste (14) ungefähr 1 ist.

8. Wischblatt für Scheiben, insbesondere für Kraftfahrzeuge, mit mindestens einem Tragelement (12), einer Wischleiste (14) und einem Verbindungsmittel (16) für einen Wischerarm (18), wobei das Tragelement (12) ein langgestreckter Flachbalken ist, an dem die Wischleiste (14) und das Verbindungsmittel (16) befestigt sind, insbesondere nach einem der vorhergehenden Ansprüche **dadurch gekennzeichnet, dass** das Tragelement eine Länge L, eine Breite b und eine Dicke d aufweist, derart, dass

$$20L^2 < bd^2 < 40L^2$$

wenn L in Meter und b und d in Millimeter angegeben werden.

9. Wischblatt nach Anspruch 8, **dadurch gekennzeichnet, dass** das Tragelement aus mindestens zwei Federbalken besteht, deren Breiten sich addieren.

10. Wischblatt für Scheiben (15) insbesondere für Kraftfahrzeuge, mit mindestens einem langgestreckten Tragelement (12), einer Wischleiste (14) und einem Verbindungsmittel (16) für einen Wischerarm (18), der in einer Betriebsstellung das Wischblatt (10) auf die Scheibe (15) drückt, wobei das Tragelement (12) ein langgestreckter Flachbalken ist, an dem die Wischleiste (14) und das Verbindungsmittel (16) befestigt sind und der in einer vom Wischerarm (18) unbelasteten Stellung eine Krümmung aufweist, insbesondere nach einem der vorhergehenden Ansprüche, **dadurch gekennzeichnet, dass** die Krümmung entlang einer der Längserstreckung des Tragelements (12) folgenden Koordinate (s) solche Werte aufweist, dass die zweite Ableitung der Krümmung nach dieser Koordinate (s) im wesentlichen proportional zu einer Auflagekraftverteilung p (s) ist, die entsteht, wenn das Wischblatt (10) auf eine ebene Scheibe (15) gedrückt ist und dass die Auflagekraftverteilung zu mindestens zu einem Ende hin abnimmt.

11. Wischblatt nach Anspruch 10, **dadurch gekennzeichnet, dass**

$$\frac{d^2 K(s)}{ds^2} = \frac{d^2 M(s)}{ds^2} * E * I = \frac{p(s)}{E * I}$$

s =      Koordinate entlang dem Tragelement
K(s) =      Krümmung des Tragelements
M(s) =      Biegemoment
E =      Elastizitätsmodul
I =      Flächenträgheitsmoment des Tragelements bezüglich der neutralen Achse

p(s) = spezifische Kraft pro Längeneinheit = Auflagekraftverteilung.

**12.** Wischblatt für Scheiben (15) insbesondere für Kraftfahrzeuge, mit mindestens einem langgestreckten Tragelement (12), einer Wischleiste (14) und einem Verbindungsmittel (16) für einen Wischerarm (18), der in einer Betriebsstellung das Wischblatt (10) auf die Scheibe (15) drückt, wobei das Tragelement (12) ein langgestreckter Flachbalken ist, an dem die Wischleiste (14) und das Verbindungsmittel (16) befestigt sind und der in einer vom Wischerarm (18) unbelasteten Stellung eine Krümmung aufweist, insbesondere nach einem der vorhergehenden Ansprüche, **dadurch gekennzeichnet, dass** die Krümmung entlang einer der Längserstreckung des Tragelements (12) folgenden Koordinate (s) solche Werte aufweist, dass die zweite Ableitung der Krümmung nach dieser Koordinate (s) minus der zweiten Ableitung der Krümmung der Scheibe (15) von einem mittleren Bereich (40) zu den Enden hin abnimmt.

**13.** Wischblatt nach Anspruch 12, **dadurch gekennzeichnet, dass** der mittlere Bereich (40) der Ort des Verbindungsmittels (16) ist.

**14.** Wischblatt nach einem der Ansprüche 12 oder 13, **dadurch gekennzeichnet, dass**

$$\frac{d^2 K(s)}{ds^2} = \frac{p(s)}{E * I} + \frac{d^2 K_{Scheibe}\ (s)}{ds^2}$$

s = Koordinate entlang dem Tragelement
K(s) = Krümmung des Tragelements
M(s) = Biegemoment
E = Elastizitätsmodul
I = Flächenträgheitsmoment des Tragelements bez. der neutralen Achse
p(s) = spezifische Kraft pro Längeneinheit = Auflagekraftverteilung

**15.** Wischblatt für Scheiben (15) insbesondere für Kraftfahrzeuge, mit mindestens einem langgestreckten Tragelement (12), einer Wischleiste (14) und einem Verbindungsmittel (16) für einen Wischerarm (18), der in einer Betriebsstellung das Wischblatt (10) auf die Scheibe (15) drückt, wobei das Tragelement (12) ein langgestreckter Flachbalken ist, an dem die Wischleiste (14) und das Verbindungsmittel (16) befestigt sind und der in einer vom Wischerarm (18) unbelasteten Stellung eine Krümmung aufweist, insbesondere nach einem der vorhergehenden Ansprüche, **dadurch gekennzeichnet, dass** die Krümmung entlang einer der Längserstreckung des Tragelements (12) folgenden Koordinate (s) solche Werte aufweist, dass die Auflagekraftverteilung p(s), die vorherrscht, wenn das Wischblatt (10) auf eine ebene Scheibe (15) gedrückt ist, in einem Bereich (40) ungefähr hälftig zwischen Mitte und Ende des Wischblatts (10) höher ist als am Ende des Wischblatts (10).

**16.** Wischblatt für Scheiben (15) insbesondere für Kraftfahrzeuge, mit mindestens einem langgestreckten Tragelement (12), einer Wischleiste (14) und einem Verbindungsmittel (16) für einen Wischerarm (18), der in einer Betriebsstellung das Wischblatt (10) auf die Scheibe (15) drückt, wobei das Tragelement (12) ein langgestreckter Flachbalken ist, an dem die Wischleiste (14) und das Verbindungsmittel (16) befestigt sind und der in einer vom Wischerarm (18) unbelasteten Stellung eine Krümmung aufweist, insbesondere nach einem der vorhergehenden Ansprüche, **dadurch gekennzeichnet, dass** die Krümmung entlang einer der Längserstreckung des Tragelements (12) folgenden Koordinate (s) solche Werte aufweist, dass die Auflagekraftverteilung p(s), die vorherrscht, wenn das Wischblatt (10) auf die zu wischende Scheibe (15) gedrückt ist, in einem Bereich (40) ungefähr hälftig zwischen Mitte und Ende des Wischblatts (10) höher ist als am Ende des Wischblatts (10).

**17.** Verfahren zum Herstellen eines Wischblatts nach einem der vorhergehenden Ansprüchen, **gekennzeichnet durch** folgende Schritte:

Ermitteln der für die zu wischenden Scheibe notwendigen Länge L und angepaßten Auflagekraft F_{wf},
Ermitteln der Breite b und der Dicke d,
Ermitteln des Krümmungsverlaufs K(s),
Biegen des Tragelements,
Verbinden von Tragelement, Wischleiste und Verbindungsmittel.

**18.** Verfahren nach Anspruch 17, **gekennzeichnet durch** folgende Schritte:

- Festlegen der Länge L und des Querschnittprofils, insbesondere die Breite b und die Dicke d über Erfahrungswerte,
- Festlegen einer Auflagekraft $F_{wf}$ bzw. einer Auflagekraftverteilung p für eine ebene Scheibe, die eine gute Wischqualität gewährleistet, ebenfalls über Erfahrungswerte,
- Ausmessen des Krümmungsverlaufes $K_{Scheibe}$ der Scheibe,
- Zweifaches Ableiten dieses Krümmungsverlaufes $K_{Scheibe}$ der Scheiben nach einer mit der Krümmung mitlaufenden Koordinate s,
- Berechnung der zweiten Ableitung des Krümmungsverlaufes K(s) des Tragelements nach obiger Beziehung,

- Zweifaches Integrieren ergibt den gesuchten Krümmungsverlauf K(s) des Tragelements.

## Claims

1. Wiper blade for windows, in particular for motor vehicles, having at least one supporting element (12), a wiper strip (14) and a connecting means (16) for a wiper arm (18), the supporting element (12) being an elongate flat bar to which the wiper strip (14) and the connecting means (16) are fastened, **characterized in that** the supporting element (12) has a cross-sectional profile, in which

$$\frac{F_{wf} * L^2}{48 * E * I_{zz}} < 0.009$$

if $F_{wf}$ is the bearing force exerted by the wiper arm (18) on the wiper blade or is the bearing force for which the wiper blade was originally configured, and L is the length of the supporting element (12), E is the modulus of elasticity of the supporting element (12), $I_{zz}$ is the moment of inertia of the cross-sectional profile about the z axis perpendicular to an s axis, which moves together with the supporting element (12), and perpendicular to a y axis.

2. Wiper blade according to Claim 1, **characterized in that**

$$\frac{F_{wf} * L^2}{48 * E * I_{zz}} < 0.005.$$

3. Wiper blade according to Claim 1 or 2, **characterized in that** the supporting element (12) has an essentially rectangular cross-sectional profile (40), with an essentially constant width b and an essentially constant thickness d.

4. Wiper blade according to one of the preceding claims, **characterized in that** the supporting element (12) comprises at least two individual bars (42, 44), and **in that** the widths (b1, b2) of the individual bars (42, 44) add up to an overall width b.

5. Wiper blade according to one of the preceding claims, **characterized in that** the width b and the thickness d of the supporting element (12) are selected in such a manner that

$$\frac{F_{wf} * L^2}{4 * E * d * b^3} < 0.009 .$$

6. Wiper blade according to one of Claims 1 to 4, **char-**

**acterized in that** the width b and the thickness d of the flat bar are selected in such a manner that

$$\frac{F_{wf} * L^2}{4 * E * d * b^3} < 0.005.$$

7. Wiper blade for windows, in particular for motor vehicles, having at least one supporting element (12), a wiper strip (14) and a connecting means (16) for a wiper arm (18), the supporting element (12) being an elongate flat bar to which the wiper strip (14) and the connecting means (16) are fastened, in particular according to one of the preceding claims, **characterized in that** the supporting element (12) has a cross-sectional profile (40) which produces a lateral angle of deflection of at least one of the supporting-element ends, with reference to the longitudinal extent of the supporting element, of $\gamma < 0.5°$, in particular $< 0.3°$, on the window (26) when the wiper blade is moved transversely with respect to its longitudinal extent on the window (26) and the coefficient of friction between the window (26) and wiper strip (14) is approximately 1.

8. Wiper blade for windows, in particular for motor vehicles, having at least one supporting element (12), a wiper strip (14) and a connecting means (16) for a wiper arm (18), the supporting element (12) being an elongate flat bar to which the wiper strip (14) and the connecting means (16) are fastened, in particular according to one of the preceding claims, **characterized in that** the supporting element has a length L, a width b and a thickness d such that

$$20L^2 < bd^2 < 40L^2$$

if L is specified in metres and b and d are specified in millimetres.

9. Wiper blade according to Claim 8, **characterized in that** the supporting element comprises at least two spring bars, the widths of which add up.

10. Wiper blade for windows (15), in particular for motor vehicles, having at least one elongate supporting element (12), a wiper strip (14) and a connecting means (16) for a wiper arm (18) which, in an operational position, presses the wiper blade (10) onto the window (15), the supporting element (12) being an elongate flat bar to which the wiper strip (14) and the connecting means (16) are fastened, and which has a curvature in a position in which it is not loaded by the wiper arm (18), in particular according to one of the preceding claims, **characterized in that** the curvature along a coordinate (s) following the longitudinal extent of the supporting element (12) has values such that the second derivative of the curvature with respect to this coordinate (s) is essentially proportional to a bearing-force distribution p (s) which arises if the wiper blade (10) is pressed onto a planar window (15), and **in that** the bearing-force distribution decreases towards at least one end.

11. Wiper blade according to Claim 10, **characterized in that**

$$\frac{d^2 K(s)}{ds^2} = \frac{d^2 M(s)}{ds^2} * E * I = \frac{p(s)}{E * I}$$

s = coordinate along the supporting element
K(s) = curvature of the supporting element
M(s) = bending moment
E = modulus of elasticity
I = geometrical moment of inertia of the supporting element with respect to the neutral axis
p(s) = specific force per unit of length = bearing-force distribution.

12. Wiper blade for windows (15), in particular for motor vehicles, having at least one elongate supporting element (12), a wiper strip (14) and a connecting means (16) for a wiper arm (18) which, in an operational position, presses the wiper blade (10) onto the window (15), the supporting element (12) being an elongate flat bar to which the wiper strip (14) and the connecting means (16) are fastened, and which has a curvature in a position in which it is not loaded by the wiper arm (18), in particular according to one of the preceding claims, **characterized in that** the curvature along a coordinate (s) following the longitudinal extent of the supporting element (12) has values such that the second derivative of the curvature with respect to this coordinate (s) minus the second derivative of the curvature of the window (15) decreases from a central region (40) towards the ends.

13. Wiper blade according to Claim 12, **characterized in that** the central region (40) is the location of the connecting means (16).

14. Wiper blade according to either of Claims 12 and 13, **characterized in that**

$$\frac{d^2 K(s)}{ds^2} = \frac{p(s)}{E * 1} + \frac{d^2 K_{window}(s)}{ds^2}$$

s = coordinate along the supporting element
K(s) = curvature of the supporting element
M(s) = bending moment
E = modulus of elasticity

I = geometrical moment of inertia of the supporting element with respect to the neutral axis
p(s) = specific force per unit of length = bearing-force distribution.

15. Wiper blade for windows (15), in particular for motor vehicles, having at least one elongate supporting element (12), a wiper strip (14) and a connecting means (16) for a wiper arm (18) which, in an operational position, presses the wiper blade (10) onto the window (15), the supporting element (12) being an elongate flat bar to which the wiper strip (14) and the connecting means (16) are fastened, and which has a curvature in a position in which it is not loaded by the wiper arm (18), in particular according to one of the preceding claims, **characterized in that** the curvature along a coordinate (s) following the longitudinal extent of the supporting element (12) has values such that the bearing-force distribution p(s) which prevails when the wiper blade (10) is pressed onto a planar window (15) is higher in a region (40) approximately halfway between the centre and end of the wiper blade (10) than at the end of the wiper blade (10).

16. Wiper blade for windows (15), in particular for motor vehicles, having at least one elongate supporting element (12), a wiper strip (14) and a connecting means (16) for a wiper arm (18) which, in an operational position, presses the wiper blade (10) onto the window (15), the supporting element (12) being an elongate flat bar to which the wiper strip (14) and the connecting means (16) are fastened, and which has a curvature in a position in which it is not loaded by the wiper arm (18), in particular according to one of the preceding claims, **characterized in that** the curvature along a coordinate (s) following the longitudinal extent of the supporting element (12) has values such that the bearing-force distribution p(s) which prevails when the wiper blade (10) is pressed onto the window (15) to be wiped is higher in a region (40) approximately halfway between the centre and end of the wiper blade (10) than at the end of the wiper blade (10).

17. Method for the production of a wiper blade according to one of the preceding claims, **characterized by** the following steps:

determining the length L necessary for the window to be wiped, and the adapted bearing force $F_{wf}$,
determining the width b and the thickness d,
determining the curvature profile K(s),
bending the supporting element,
connecting supporting element, wiper strip and connecting means.

**18.** Method according to Claim 17, **characterized by** the following steps:

- defining the length L and the cross-sectional profile, in particular the width b and the thickness d, via experimental values,
- defining a bearing force $F_{wf}$ or a bearing-force distribution p for a planar window, that ensures a good wiping quality, likewise via experimental values,
- measuring the curvature profile $K_{window}$ of the window,
- twice deriving this curvature profile $K_{window}$ of the windows with respect to a coordinate s moving together with the curvature,
- calculating the second derivative of the curvature profile K(s) of the supporting element with respect to the above relationship,
- integration twice resulting in the sought curvature profile K(s) of the supporting element.

**Revendications**

**1.** Raclette d'essuie-glace pour vitres, notamment pour véhicules automobiles, comprenant au moins un élément de support (12), une baguette d'essuie-glace (14) et un moyen de jonction (16) pour un bras d'essuie-glace (18), l'élément de support (12) étant une barre plate allongée à laquelle la baguette d'essuie-glace (14) et le moyen de jonction (16) sont fixés,
**caractérisée en ce que**
l'élément de support (12) présente un profil de section transversale où

$$\frac{F_{wf} * L^2}{48 * E * I_{zz}} < 0,009$$

si $F_{wf}$ est la force d'appui exercée par le bras d'essuie-glace (18) sur la raclette d'essuie-glace ou la force d'appui pour laquelle la raclette d'essuie-glace a initialement été conçue, L est la longueur de l'élément de support (12), E le module d'élasticité de l'élément de support (12), Izz le moment d'inertie du profil de section transversale autour de l'axe z perpendiculairement à un axe s accompagnant l'élément de support (12) et perpendiculairement à un axe y.

**2.** Raclette d'essuie-glace selon la revendication 1,
**caractérisée en ce que**

$$\frac{F_{wf} * L^2}{48 * E * I_{zz}} < 0,005$$

**3.** Raclette d'essuie-glace selon la revendication 1 ou 2,
**caractérisée en ce que**
l'élément de support (12) présente un profil de section transversale (40) pour l'essentiel rectangulaire avec une largeur b pour l'essentiel constante et une épaisseur d pour l'essentiel constante.

**4.** Raclette d'essuie-glace selon l'une quelconque des revendications précédentes,
**caractérisée en ce que**
l'élément de support (12) comprend au moins deux barres individuelles (42, 44), et les largeurs (b1, b2) des barres individuelles (42, 44) s'additionnent en une largeur totale b.

**5.** Raclette d'essuie-glace selon l'une quelconque des revendications précédentes,
**caractérisée en ce que**
la largeur b et l'épaisseur d de l'élément de support (12) sont choisies de manière à ce que

$$\frac{F_{wf} * L^2}{4 * E * d * b^3} < 0,009$$

**6.** Raclette d'essuie-glace selon l'une quelconque des revendications 1 à 4,
**caractérisée en ce que**
la largeur b et l'épaisseur d de la barre plate sont choisies de manière à ce que

$$\frac{F_{wf} * L^2}{4 * E * d * b^3} < 0,005$$

**7.** Raclette d'essuie-glace pour vitres, notamment pour véhicules automobiles, comprenant au moins un élément de support (12), une baguette d'essuie-glace (14) et un moyen de jonction (16) pour un bras d'essuie-glace (18), l'élément de support (12) étant une barre plate allongée à laquelle la baguette d'essuie-glace (14) et le moyen de jonction (16) sont fixés, notamment selon l'une quelconque des revendications précédentes,
**caractérisée en ce que**
l'élément de support (12) présente un profil de section transversale (40) qui génère sur la vitre (26) un angle de déviation latéral d'au moins l'une des extrémités de l'élément de support par rapport à l'étendue longitudinale de l'élément de support de $\gamma < 0,5°$, notamment $< 0,3°$ lorsque la raclette d'essuie-glace est déplacée sur la vitre (26) transversalement à son étendue longitudinale, et le coefficient de frottement entre la vitre (26) et la baguette d'essuie-glace (14) est environ 1.

**8.** Raclette d'essuie-glace pour vitres, notamment pour véhicules automobiles, comprenant au moins un élément de support (12), une baguette d'essuie-glace (14) et un moyen de jonction (16) pour un bras d'essuie-glace (18), l'élément de support (12) étant une barre plate allongée à laquelle la baguette d'essuie-glace (14) et le moyen de jonction (16) sont fixés, notamment selon l'une quelconque des revendications précédentes,
**caractérisée en ce que**
l'élément de support présente une longueur L, une largeur b et une épaisseur d, de manière à ce que

$$20L^2 < bd^2 < 40L^2$$

si L est indiquée en mètres et b et d en millimètres.

9. Raclette d'essuie-glace selon la revendication 8,
**caractérisée en ce que**
l'élément de support comprend au moins deux barres élastiques dont les largeurs s'additionnent.

10. Raclette d'essuie-glace pour vitres (15), notamment pour véhicules automobiles, comprenant au moins un élément de support (12) allongé, une baguette d'essuie-glace (14) et un moyen de jonction (16) pour un bras d'essuie-glace (18), qui dans une position de fonctionnement applique la raclette d'essuie-glace (10) sur la vitre (15), l'élément de support (12) étant une barre plate allongée à laquelle la baguette d'essuie-glace (14) et le moyen de jonction (16) sont fixés et qui, dans une position non sollicitée par le bras d'essuie-glace (18), présente une courbure, notamment selon l'une des revendications précédentes,
**caractérisée en ce que**
le long d'une coordonnée (s) suivant l'étendue longitudinale de l'élément de support (12) la courbure présente des valeurs telles que la deuxième déviation de la courbure selon cette coordonnée (s) est pour l'essentiel proportionnelle à une répartition de force d'appui p (s) qui est générée lorsque la raclette d'essuie-glace (10) est appliquée sur une vitre (15) plane, et la répartition de force d'appui diminue en direction d'au moins une extrémité.

11. Raclette d'essuie-glace selon la revendication 10,
**caractérisée en ce que**

$$\frac{d^2K(s)}{ds^2} = \frac{d^2M(s)}{ds^2} * E * I = \frac{p(s)}{E * I}$$

s = coordonnée le long de l'élément de support

K(s) = courbure de l'élément de support

M(s) = moment de flexion

E = module d'élasticité

I = moment surfacique d'inertie de l'élément de support par rapport à l'axe neutre

p(s) = force spécifique par unité de longueur = répartition de force d'appui.

12. Raclette d'essuie-glace pour vitres (15), notamment pour véhicules automobiles, comprenant au moins un élément de support (12) allongé, une baguette d'essuie-glace (14) et un moyen de jonction (16) pour un bras d'essuie-glace (18), qui dans une position de fonctionnement applique la raclette d'essuie-glace (10) sur la vitre (15), l'élément de support (12) étant une barre plate allongée à laquelle la baguette d'essuie-glace (14) et le moyen de jonction (16) sont fixés et qui, dans une position non sollicitée par le bras d'essuie-glace (18), présente une courbure, notamment selon l'une quelconque des revendications précédentes,
**caractérisée en ce que**
le long d'une coordonnée (s) suivant l'étendue longitudinale de l'élément de support (12) la courbure présente des valeurs telles que la deuxième déviation de la courbure selon cette coordonnée (s) moins la deuxième déviation de la courbure de la vitre (15) diminue depuis une zone centrale (40) en direction des extrémités.

13. Raclette d'essuie-glace selon la revendication 12,
**caractérisée en ce que**
la zone centrale (40) est l'emplacement du moyen de jonction (16).

14. Raclette d'essuie-glace selon l'une quelconque des revendications 12 ou 13,
**caractérisée en ce que**

$$\frac{d^2K(s)}{ds^2} = \frac{p(s)}{E * I} + \frac{d^2K_{Scheibe}(s)}{ds^2}$$

s = coordonnée le long de l'élément de support

K(s) = courbure de l'élément de support

M(s) = moment de flexion

E = module d'élasticité

I = moment surfacique d'inertie de l'élément de support par rapport à l'axe neutre

p(s) = force spécifique par unité de longueur = répartition de force d'appui.

15. Raclette d'essuie-glace pour vitres (15), notamment pour véhicules automobiles, comprenant au moins un élément de support (12) allongé, une baguette d'essuie-glace (14) et un moyen de jonction (16) pour un bras d'essuie-glace (18), qui dans une position de fonctionnement applique la raclette d'essuie-glace (10) sur la vitre (15), l'élément de support (12) étant une barre plate allongée à laquelle la baguette d'essuie-glace (14) et le moyen de jonction (16) sont fixés et qui, dans une position non sollicitée par le bras d'essuie-glace (18), présente une courbure, notamment selon l'une quelconque des revendications précédentes,

**caractérisée en ce que**

le long d'une coordonnée (s) suivant l'étendue longitudinale de l'élément de support (12) la courbure présente des valeurs telles que la répartition de force d'appui p (s), qui prédomine lorsque la raclette d'essuie-glace (10) est appliquée sur une vitre (15) plane, est plus grande dans une zone (40) située à peu près au milieu entre le centre et l'extrémité de la raclette d'essuie-glace (10) qu'à l'extrémité de la raclette d'essuie-glace (10).

16. Raclette d'essuie-glace pour vitres (15), notamment pour véhicules automobiles, comprenant au moins un élément de support (12) allongé, une baguette d'essuie-glace (14) et un moyen de jonction (16) pour un bras d'essuie-glace (18), qui dans une position de fonctionnement applique la raclette d'essuie-glace (10) sur la vitre (15), l'élément de support (12) étant une barre plate allongée à laquelle la baguette d'essuie-glace (14) et le moyen de jonction (16) sont fixés et qui, dans une position non sollicitée par le bras d'essuie-glace (18), présente une courbure, notamment selon l'une quelconque des revendications précédentes,

**caractérisée en ce que**

le long d'une coordonnée (s) suivant l'étendue longitudinale de l'élément de support (12) la courbure présente des valeurs telles que la répartition de force d'appui p (s), qui prédomine lorsque la raclette d'essuie-glace (10) est appliquée sur la (15) à essuyer, est plus grande dans une zone (40) située à peu près au milieu entre le centre et l'extrémité de la raclette d'essuie-glace (10) qu'à l'extrémité de la raclette d'essuie-glace (10).

17. Procédé de fabrication d'une raclette d'essuie-glace selon l'une quelconque des revendications précédentes,

**caractérisé par**

les étapes suivantes :

- détermination de la longueur L nécessaire pour la vitre à essuyer et de la force d'appui Fwf adaptée,
- détermination de la largeur b et de l'épaisseur d,
- détermination de l'évolution de la courbure K (s),
- flexion de l'élément de support,
- assemblage de l'élément de support, de la baguette d'essuie-glace et du moyen de jonction.

18. Procédé selon la revendication 17,

**caractérisé par**

les étapes suivantes :

- définition de la longueur L et du profil de section transversale, notamment de la largeur b et de l'épaisseur d, à l'aide de valeurs empiriques,
- définition d'une force d'appui $F_{wf}$ ou d'une répartition de force d'appui p pour une vitre plane, qui assure une bonne qualité d'essuyage, également à l'aide de valeurs empiriques,
- mesure de l'évolution de la courbure $K_{vitre}$ de la vitre,
- double déviation de cette évolution de la courbure $K_{vitre}$ des vitres selon une coordonnée s accompagnant la courbure,
- calcul de la deuxième déviation de l'évolution de la courbure K(s) de l'élément de support selon la relation ci-dessus,
- double intégration pour obtenir l'évolution de la courbure K(s) recherchée de l'élément de support.

Fig. 1

Fig. 2

**Fig. 3**

**Fig. 4**

**Fig. 5**

**Fig. 6**

**Fig. 7**

EP 1 109 706 B1

Fig. 8

Fig. 9

Fig. 10